# EUROPEAN PATENT SPECIFICATION

(11) **EP 4 443 019 B1**
(45) Date of publication and mention of the grant of the patent: **31.12.2025**
(21) Application number: 24161433.8
(22) Date of filing: 05.03.2024
(51) Int. Cl.: F16H 25/20, H02K 7/116, H02K 5/173

(54) **ELECTROMECHANICAL ACTUATOR**
ELEKTROMECHANISCHER AKTUATOR
ACTIONNEUR ÉLECTROMÉCANIQUE

(30) Priority: 05.04.2023 FI 20235384
(43) Date of publication of application: 09.10.2024
(73) Proprietor: Norrhydro Oy, 96100 Rovaniemi (FI)
(72) Inventor: Lehto, Timo, 33720 Tampere (FI)
(74) Representative: Moosedog Oy

(56) References cited:
- DE-A1- 10 064 901
- DE-U1- 8 709 223
- US-A1- 2005 092 558

## Description

### TECHNICAL FIELD

The present invention relates to electromechanical actuators.

### BACKGROUND

Actuators have been in use for several decades and have found applications in various industries such as aerospace, automotive, robotics, manufacturing and so forth. Typically, the actuators are devices that convert electrical energy into mechanical motion and are used to control the movement of various components in machines and systems. Notably, an electromechanical actuator is widely used due to its wide application. The electromechanical actuator is a device that converts electrical energy into mechanical motion or force. The electromechanical actuator consists of an electric motor and a mechanical means that converts the rotational motion of the motor into linear motion or force. The electric motor can be a DC motor or an AC motor, and it is controlled by an electronic controller that adjusts the speed of the motor and the direction of the mechanical means. The mechanical means include gears, screws, or pistons. Moreover, the electromechanical actuator is preferred over conventional hydraulic or pneumatic actuators because they are more precise, faster, and quieter.

The electromechanical actuators are typically linear actuators, rotary actuators, and solenoids. Suitably, the linear actuator is used to produce linear motion. Linear actuators consist of a motor and an output shaft. When the motor rotates, it drives the output shaft, producing linear motion. The linear actuators provide linear motion and are used in applications such as lifting, pushing, or pulling Moreover, the rotary actuators are used to produce rotary motion. The rotary actuators consist of a motor, a gear train, and an output shaft. When the motor rotates, it drives the gear train, which in turn rotates the output shaft, producing rotary motion. However, the existing electromechanical actuators have limitations in terms of their ability to produce complex motion patterns and their overall efficiency. Moreover, the existing electromechanical actuator designs are not able to provide higher forces, speeds, and precision. Furthermore, the existing electromechanical actuators are expensive and are difficult to integrate into standard machinery due to their size and weight. Moreover, the actuators have a low force density.

Furthermore, the existing electromechanical actuators are causing because of their size (length and overall width) challenges, especially when they are fit to places where there is not much space available. In current solutions, when the gear is centric to the electric motor, the actuator is typically quite long, and if the electric motor is aside of the actuator cylinder, then the actuator is typically wide, which is not favourable, because it makes it vulnerable and on the other hand its width may cause problems when it is fitted to places where there is not much space available. DE 100 64 901 A1 discloses an electromechanical actuator comprising a reciprocating assembly, an outer hollow cylinder and an inner cylinder enclosed by the outer hollow cylinder and configured to receive the screw of the reciprocating assembly therethrough concentrically, and a motor assembly concentrically arranged at the distal end of the outer hollow cylinder.

Also, a challenge in the current solutions of electromechanical actuators is that they are not very well protected against damaging (like hits or impacts from objects or damage because of dirt penetrating the actuator).

Briefly, the current solutions are not very compact and durable.

Therefore, in light of the foregoing discussion, there exists a need to overcome the aforementioned drawbacks associated with the existing actuators.

### SUMMARY

The present invention seeks to provide an electromechanical actuator. An aim of the present invention is to provide a solution that overcomes at least partially the problems encountered in prior art.

The objective is achieved by an electromechanical actuator as described in claim 1.

Embodiments of the present invention substantially eliminate or at least partially address the aforementioned problems in the prior art, and enable compact, and efficient electromechanical actuator. Moreover, the electromechanical actuator provides smooth and precise motion with reduced friction and wear and is thereby configured to absorb the loads produced during the operation thereof.

Additional aspects, advantages, features and objects of the present invention would be made apparent from the drawings and the detailed description of the illustrative embodiments construed in conjunction with the appended claims that follow.

It will be appreciated that features of the present invention are susceptible to being combined in various combinations without departing from the scope of the present invention as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present invention, exemplary constructions of the invention are shown in the drawings. However, the present invention is not limited to specific methods and instrumentalities disclosed herein. Moreover, those skilled in the art will understand that the drawings are not to scale. Wherever possible, like elements have been indicated by identical numbers.

Embodiments of the present invention will now be described, by way of example only, with reference to the following diagrams wherein:
- FIG. 1: is a cross-sectional view of an electromechanical actuator, in accordance with an embodiment of the present invention;
- FIGs. 2A, 2B and 2C: are an arrangement of a screw with a planetary gear assembly of the electromechanical actuator, in accordance with an embodiment of the present invention;
- FIG. 3A: illustrated is a motor assembly of the electromechanical actuator, in accordance with an embodiment of the present invention; and
- FIG. 3B: illustrated is a component of the motor assembly of the electromechanical actuator, in accordance with an embodiment of the present invention.
- FIG. 4: illustrated is a perspective view of the electromechanical actuator, in accordance with an embodiment of the present invention
- FIG. 5: illustrated is a perspective view of the electromechanical actuator where the reciprocating movement of the inner hollow cylinder is shown, in accordance with an embodiment of the present invention.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present invention and ways in which they can be implemented. Although some modes of carrying out the present invention have been disclosed, those skilled in the art would recognize that other embodiments for carrying out or practising the present invention are also possible.

The present invention provides an electromechanical actuator comprising:
- a reciprocating assembly having
   - a screw comprising a threaded body portion and a distal end integral with threaded body portion,
   - a nut threadably engaged to the threaded body portion of the screw, and
   - a guide mounted on the nut;
- a cylinder assembly having
   - an outer hollow cylinder having a proximal end and a distal end,
      and
   - an inner hollow cylinder having a proximal end and a distal end, the inner hollow cylinder enclosed by the outer hollow cylinder and configure to receive the screw of the reciprocating assembly therethrough, wherein the distal end of the inner hollow cylinder abuts the nut of reciprocating assembly to reciprocate with respect to the outer hollow cylinder with a reciprocating movement provided by the nut and the screw;
- a motor assembly concentrically arranged at the distal end of the outer hollow cylinder for partially receiving the cylinder assembly, the motor assembly having
   - a motor stator,
   - a motor rotor surrounded by the motor stator,
   - a flange abuts the motor rotor, and
   - a pair of motor bearing surrounded by the motor rotor;
- a planetary gear assembly operatively arranged in connection with the motor assembly and reciprocating assembly, the planetary gear assembly comprising
   - a sun gear coupled to the flange of the motor assembly and receiving the distal end of the screw therethrough,
   - a plurality of planet gears operatively coupled to the sun gear,
   - a ring gear operatively coupled to the plurality of planet gears, and
   - a carrier for supporting the plurality of planet gears, the carrier operatively coupled to the distal end of the screw for transmitting a rotary motion of the motor assembly to the screw for generating the reciprocating movement to be provided to the inner hollow cylinder;
- a bearing assembly having at least one bearing arranged on the carrier; and
- a housing abuts the motor stator and configured to surround the planetary gear assembly and the bearing assembly and
wherein the electromechanical actuator further comprises a bearing rest arranged on the distal end of the outer hollow cylinder, the bearing rest supports the pair of motor bearing thereon and wherein it also comprises a first cover plate arranged on the distal end of the outer hollow cylinder and abuts the bearing rest, and a second cover plate opposite to the first cover plate and abuts the housing, wherein the motor assembly is a frameless motor with the motor stator arranged between the first cover plate and the second cover plate.

The present invention provides the aforementioned electromechanical actuator. The electromechanical actuator provides precise and repeatable linear motion and rotational motion with high force capability, making it well-suited for a wide range of applications. The use of a screw-nut mechanism, along with the planetary gear assembly, enables high efficiency and torque output, which allows for fast and accurate positioning of loads. Moreover, the electromechanical actuator is compact, which is achieved by the use of the concentric motor assembly and the planetary gear assembly. The concentric motor assembly allows for more efficient use of space, and the integration of the planetary gear assembly set eliminates the need for external gearboxes.

The electromechanical actuator also provides high reliability due to its simple and robust design. The use of the pair of motor bearing bearings and the bearing assembly arranged on the motor assembly and the carrier, respectively, provides smooth and precise motion with reduced friction and wear and is thereby configured to absorb the loads produced during the operation of the electromechanical actuator. Furthermore, the design of the electromechanical actuator allows for easy assembly, maintenance, and repair. The use of cover plates and housing that surrounds the planetary gear assembly and bearing assembly provides protection and containment of the moving parts, while also allowing for easy access for maintenance and repair. Additionally, the modular design of the electromechanical actuator enables easy disassembly and replacement of individual components if required.

Throughout the present invention, the term *"electromechanical actuator"* as used herein refers to a device that is configured to convert electrical energy into mechanical motion. The electromechanical actuator is arranged to provide precise and controllable motion when in use. Typically, the electromechanical actuators convert the rotational force to generate linear motion. In addition, during the linear motion, the electromechanical actuator may also rotate along its axis. Advantageously, the electromechanical actuators are configured to provide precise and repeatable motion. Moreover, the electromechanical actuators are capable of providing highly accurate and consistent motion. Furthermore, the aforementioned electromechanical actuators are reliable and easy to maintain.

The term *"reciprocating assembly"* as used herein refers to a mechanical component that moves back and forth in a straight-line motion. Herein the reciprocating assembly comprises the screw. The term *"screw"* refers to an elongated body that has a helical (spiral) ridge or groove, which is designed to mesh with the grooves or threads of a mating component. The screw comprises the threaded body portion which is typically a cylindrical section of the screw that extends along its length, and the threads are arranged on an external surface of the screw. Suitably, the screw with the external threaded body portion is screwed into a mating component with internal threads, such as a nut, the two components become mechanically coupled and can be used to generate linear and/or rotational motion. Optionally, the screw threaded body portion can be fabricated from plastic, metal, non-metal, composite, fibre or any combination thereof. Moreover, the screw comprises the distal end integral with threaded body.

The term "concentrically" as used herein refers that the inner and outer hollow cylinder and the screw are aligned so that they have practically a common longitudinal axis / aligned around a common longitudinal axis.

It will be appreciated that the nut is threadably engaged with the threaded body portion of the screw and is arranged to provide a mechanical connection between the nut and the screw. Optionally, the nut may be hexagonal-shaped, circular-shape, square-shaped, rectangular-shaped or any combination thereof with a hole in the centre that is threaded internally. Optionally, the nut may be fabricated from a metal, plastic, composite or any combination thereof. Moreover, the guide is mounted on the nut. The term *"guide"* as used herein refers to a component that is mounted on the nut of the reciprocating assembly and is configured to provide stability and support to the nut to ensure that the nut moves along a predetermined path or axis during operation. In particular, the nut is configured to move back and forth along the length of the screw, generating linear motion. The guide is mounted on the nut, and it ensures that the nut moves along a predetermined path as it reciprocates along the screw. Optionally, the guide is fabricated from plastic, metal, non-metal, composites, fibres or any combination thereof. Beneficially, the guide helps to prevent the nut from deviating from the desired path. This can improve the overall performance of the actuator and make it more reliable in operation.

The term *"cylinder assembly"* as used herein refers to a component that is used to provide a mechanical guide for the reciprocating assembly and to help generate the linear motion. The cylinder assembly includes the outer hollow cylinder having the proximal end and the distal end opposite to the proximal end, and the inner hollow cylinder having the proximal end and the distal end opposite to the proximal end. The inner hollow cylinder is enclosed by the outer hollow cylinder. The inner hollow cylinder is configured to receive the screw of the reciprocating assembly through its centre. Herein, the distal end of the inner hollow cylinder abuts the nut of the reciprocating assembly, such that the inner cylinder moves with the nut as it reciprocates back and forth along the screw. Moreover, the outer hollow cylinder is arranged to control the movement of the inner hollow cylinder in the reciprocating assembly, thereby keeping the inner hollow cylinder aligned and preventing it from wobbling or deviating from its desired path. The inner hollow cylinder is designed to work in conjunction with the nut and screw of the reciprocating assembly, to generate the linear motion. The guide is configured to fit snugly against the inner surface of the cylinder assembly and help to maintain the alignment of the nut within the cylinder. Thus, the electromechanical actuator enables a large load to be moved over a predefined distance. Moreover, the electromechanical actuator offers a greater range of control and efficiency and may widely be implemented in automobiles, lifts, cranes, heavy machines, robotic arms, modular beds, modular doors, and so forth.

Optionally, the reciprocating movement comprises to-and-fro movement of the inner hollow cylinder with respect to the outer hollow cylinder. In this regard, the movement of the inner hollow cylinder is actuated by the reciprocating assembly. Herein, the electromechanical actuator comprises the outer hollow cylinder and the inner hollow cylinder that is configured to receive the screw of the reciprocating assembly. When the screw is rotated, the nut, which is threadably engaged to the screw, moves along the screw's threaded body portion. Moreover, the nut is mounted on the guide, the movement of the nut causes the inner hollow cylinder to move along the axis with respect to the outer hollow cylinder, resulting in the reciprocating movement. The term *"to-and-fro movement"* refers to the back-and-forth movement of the inner hollow cylinder as it moves along the length of the screw. The back-and-forth movement is characterized by a series of repeated cycles, where the inner hollow cylinder moves outwards from the outer hollow cylinder, and then inwards thereof. The said movement is continuous, resulting in the reciprocating motion of the electromechanical actuator that can be harnessed to perform various functions, for example, actuating a valve or a piston in a machine, and so forth.

The motor assembly in the electromechanical actuator is responsible for providing the rotary motion necessary to generate the linear motion of the electromechanical actuator. Optionally, the motor assembly is an electric motor assembly. Typically, the electric motor converts electrical energy into mechanical energy. Moreover, the electric motor assembly can be powered by direct current (DC) sources, such as batteries or rectifiers, or by alternating current (AC) sources, such as a power grid, inverters or electrical generators. Typically, the electric motors produce a linear force or a rotary force i.e., torque intended to rotate the driving part, such as the reciprocating assembly and the cylinder assembly, coupled to it. Besides the electric motor, optionally, the motor assembly may be selected but not limited to hydraulic motor, gear motor, pneumatic motor and the like.

Notably, the motor stator is a stationary part of the motor assembly. Optionally, the motor stator contains coils of wire. In particular, when an electrical current is passed through the coils, a magnetic field is generated. Moreover, the motor rotor is a rotating part of the motor assembly that contains permanent magnets. In particular, as the magnetic field from the stator interacts with the magnets on the rotor, a torque is produced, causing the motor rotor to rotate. It will be appreciated that the flange is a disk-shaped component that abuts the motor rotor and provides a mounting point for the planetary gear assembly. The pair of motor bearing are designed to support the motor rotor and allow it to rotate smoothly and accurately.

Optionally, the motor bearing is a ball bearing, such as a deep-groove ball bearing, self-aligning ball bearing, angular-contact ball bearing, thrust ball bearing and forth. Optionally, the motor bearing is a roller bearing, such as a spherical roller bearing, cylindrical roller bearing, tapered roller bearing, needle roller bearing and so forth. In this regard, the pair of motor bearing is surrounded by the motor rotor and is used to reduce rotational friction and support the motor assembly from radial and axial loads due to the rotation of the motor assembly. Moreover, the bearing, while facilitating motion, support both the rotation of the screw and the force applied by the planetary gear assembly.

The electromechanical actuator further comprises a bearing rest arranged on the distal end of the outer hollow cylinder, the bearing rest supports the pair of motor bearing thereon. In this regard, the term *"bearing rest"* as used herein refers to a component that is arranged on the distal end of the outer hollow cylinder to support the pair of motor bearings. The bearing rest of the motor assembly help to stabilize the motor rotor as it rotates. Moreover, the arrangement of the bearing rest on the outer hollow cylinder helps to effectively support and ensure the proper functioning of the electromechanical actuator. Furthermore, the bearing rest minimizes vibration or wobbling that occurs during the operation of the electromechanical actuator.

The electromechanical actuator further comprises a first cover plate arranged on the distal end of the outer hollow cylinder and abuts the bearing rest, and a second cover plate opposite to the first cover plate and abuts the housing. In this regard, the first cover plate and the second cover plate are positioned at opposite ends surrounding the motor assembly. Herein, the first cover plate is arranged on the distal end of the outer hollow cylinder and abuts the bearing rest. Suitably, the first cover plate is used to hold the motor bearing in place and to provide protection and support to the bearing assembly. Moreover, the second cover plate abuts the housing that surrounds the motor assembly from the opposite end. The second cover plate serves to provide additional protection and securely hold the motor assembly thereof. Beneficially, the arrangement of the first and second cover plate form a protective outer shell for the electromechanical actuator.

The motor assembly is a frameless motor with the motor stator arranged between the first cover plates and second cover plates. In this regard, the frameless motor is a type of motor in which the motor stator and motor rotor are not contained within a traditional motor housing or frame. Typically, the motor stator is mounted to a stationary structure of the electromechanical actuator and the motor rotor is mounted to the screw. Herein, the motor stator is arranged between the first and second cover plates of the electromechanical actuator, which provides a compact and space-saving design. Optionally, the frameless motor allows a smaller overall size of the motor assembly and thereby maintaining a high torque output.

Moreover, the use of the frameless motor allows easier integration of the motor assembly within the electromechanical actuator, as the motor assembly can be mounted directly to the load (such as the reciprocating assembly) without the need for additional mechanical components such as couplings or mounting brackets and the like. Additionally, the frameless design of the motor allows for a reduction in the weight and size of the electromechanical actuator.

Optionally,
- the motor stator comprises a coil housing and a coil arrangement housed within the coil housing, and
- the motor rotor comprises a magnet housing and a permanent magnet housed within the magnet housing.

The motor stator is the stationary part of the motor assembly that surrounds the motor rotor. The motor stator is composed of the coil housing and the coil arrangement housed within the coil housing. Notably, the coil housing is a component that houses the coil arrangement. The coil arrangement is made of wire wound around a core and is used to create a magnetic field when an electric current is passed through it. The coil housing provides physical support for the coil arrangement and protects from external factors such as moisture, dust, and heat. Optionally, the coil housing has openings or vents to facilitate the dissipation of heat generated by the coil arrangement. Optionally, the coil arrangement consists of copper or aluminium wires.

The motor rotor is composed of the magnet housing and the permanent magnet housed within the magnet housing. The magnet housing is a structure that holds and supports the permanent magnet within the motor assembly. Optionally, the magnet housing is made of a ferromagnetic material that enhances the magnetic field produced by the permanent magnet. The magnet housing is designed to keep the magnet securely in place from damage or loss of magnetization. The magnetic field generated by the motor stator interacts with the magnetic field of the motor rotor, causing the motor rotor to rotate.

Optionally, the electromechanical actuator further comprises connecting wire terminals extending from the coil arrangement and through the coil housing. In this regard, the wire terminals are used to connect the motor stator to an external power source. Typically, the wires are connected to the coil arrangement, which is housed within the coil housing of the motor stator. The wire terminals extend through the coil housing, which provides protection to the wires and ensures they are securely held in place. The wire terminals enable the motor stator to receive electrical power and convert it into mechanical energy. In particular, the wire terminals are fabricated from a conductive material such as copper. It will be appreciated that the wire terminals are designed to be durable and withstand the rigorous operating environment of the electromechanical actuator.

Typically, the motor assembly is arranged concentrically at the distal end of the outer hollow cylinder of the cylinder assembly. The planetary gear assembly is mounted to the flange of the motor assembly and is operatively arranged in connection with the reciprocating assembly to provide the linear motion. It will be appreciated that the concentric design of the motor assembly helps in reducing the overall size and weight of the electromechanical actuator by integrating the motor assembly with the cylinder assembly. The concentric motor assembly makes it easier to install the electromechanical actuator in tight spaces where there is limited space available. Moreover, the motor assembly arranged concentrically with respect to the cylinder assembly helps in the direct transfer of energy from the motor rotor to the load, resulting in higher efficiency.

The motor assembly may vary depending on the requirements of the electromechanical actuator, such as the required torque or speed of the electromechanical actuator. For example, a high-torque electromechanical actuator may require the motor assembly with a greater motor stator and motor rotor, while a high-speed electromechanical actuator may require the motor assembly with a compact stator and rotor and higher RPM capability.

The planetary gear assembly (also known as epicyclic gear assembly) is a type of gear system operatively arranged in connection with the motor assembly and reciprocating assembly. In particular, the planetary gear assembly is configured to provide a range of speed, torque, and direction to the electromechanical actuator. Optionally, the planetary gear assembly is configurable to operate in harsh environmental conditions. Herein, the planetary gear system comprises the sun gear, the plurality of planet gears, the ring gear and the carrier. The sun gear is coupled to the flange of the motor assembly and receives the distal end of the screw therethrough. The sun gear is located in the centre of the planetary gear assembly and is surrounded by the plurality of planet gears that mesh with both the sun gear and the outer ring gear. As the sun gear rotates, it causes the plurality of planet gears to rotate around it, which in turn causes the outer ring gear to rotate. The carrier is arranged for supporting the plurality of planet gears. Moreover, the carrier operatively coupled to the distal end of the screw for transmitting a rotary motion of the motor assembly to the screw for generating the reciprocating movement to be provided to the inner hollow cylinder. Optionally, the sun gear, the plurality of planet gears, the ring gear, and the carrier are fabricated from steel, cast iron, aluminum, brass, plastics, composites and the like, having greater strength and are operable at various ranges of speeds.

Optionally, the sun gear is configured to receive the distal end of the screw therethrough in a spaced apart manner. In this regard, the sun gear is arranged in such a way that the distal end of the screw is inserted through the sun gear in a spaced apart manner. Notably, the sun gear of the planetary gear assembly is utilized to convert the rotary motion of the motor assembly into a reciprocating movement of the screw. Specifically, the sun gear is positioned such that the distal end of the screw is inserted through the center of the sun gear and extends beyond it. The sun gear has teeth that mesh with the plurality of planet gears, which are arranged around the sun gear and the ring gear. Operatively, as the motor rotor rotates and the sun gear turns, the planetary gears engage with the sun gear and the ring gear to transmit motion to the screw. The sun gear ensures that the screw can move freely within the sun gear while still being supported and guided by the sun gear.

It will be appreciated that the planetary gear assembly is arranged to convert the rotary motion of the motor assembly into the reciprocating movement of the inner hollow cylinder of the cylinder assembly. Suitably, as the motor assembly rotates the sun gear, the plurality of planet gears rotates along the axis. The plurality of planet gears is held in place by the carrier, which is fixed to the distal end of the screw. As a result, the rotational motion of the planet gears is converted into a linear motion of the screw and the nut of the reciprocating assembly. This, in turn, causes the inner cylinder assembly to reciprocate with respect to the outer cylinder assembly, providing the desired reciprocating movement.

Optionally, the carrier of the planetary gear assembly comprises
- a planer portion configured to support the plurality of planet gears, and
- a hollow protruding portion integral with and extending from the planer portion, the hollow protruding portion configured to receive the distal end of the screw therethrough.

In this regard, the carrier of the planetary gear assembly supports the plurality of planet gears and maintains adequate spacing therebetween. The carrier comprises the planer portion and the hollow protruding portion. The planer portion is a flat structure that is designed to support the plurality of planet gears and mesh with the sun gear and ring gear of the planetary gear assembly. The term *"hollow protruding portion"* refers to a portion of the planetary gear assembly that protrudes outwardly from the planer portion of the carrier. The hollow protruding portion is the integral part of the carrier. The hollow protruding portion is designed to receive the distal end of the screw therethrough. The hollow protruding portion provides a stable and secure mounting point for the screw, ensuring that it is properly aligned and supported.

Optionally, the hollow protruding portion and the distal end of the screw is operatively coupled using a key and hole arrangement. In this regard, the key and hole arrangement comprise a small metal piece known as a key, which is inserted into a slot, groove or channel to form a locking mechanism. Suitably, the key and hole arrangement are used to ensure a secure and reliable connection between the screw and the carrier. Typically, the key is a small rectangular piece of metal that is inserted into a corresponding hole in the hollow protruding portion of the carrier. Optionally, the key may have a square shape, circular shape, triangular shape or any polygonal shape. In this regard, the hole is complementary to the shape of the key.

The distal end of the screw is inserted into the hollow protruding portion and engaged with the key, to provide a secure and precise coupling therebetween. The key and hole arrangement helps to ensure that the screw is properly aligned and supported, and can drive the reciprocating movement of the electromechanical actuator with maximum efficiency and reliability. Advantageously, the key and hole arrangement provides a secure, non-slip connection between the carrier and the screw.

The term *"bearing assembly"* as used herein refers to a component that supports the planetary gear assembly and transmits the rotational motion to the screw of the reciprocating assembly. Notably, the bearing assembly is the collection of one or more bearings that are arranged on the carrier of the planetary gear assembly. The bearing assembly is designed to reduce friction and wear between the carrier and the planetary gear assembly by providing a smooth and low-friction interface therebetween. Beneficially, the bearing assembly helps to improve the efficiency, reliability, and lifespan of the electromechanical actuator.

Optionally, the at least one bearing of the bearing assembly may utilize a rolling-element bearing that uses balls or rollers to maintain the separation between bearing races. The bearing races are rings separated by a groove where the balls or rollers rest. Additionally, one race may be stationary and the other may be attached to the rotating assembly (for example, the planetary gear assembly). In this regard, the bearing is used to reduce rotational friction and support the planetary gear assembly from radial and axial loads due to the rotation thereof.

Moreover, the at least one bearing, while facilitating motion, support both the rotation and the force applied by the planetary gear assembly. The at least one bearing may include, but are not limited to, ball bearing, roller bearing, deep-groove bearings, angular contact bearing, self-aligning bearing, thrust bearing and the like.

Optionally, the at least one bearing is arranged between the hollow protruding portion of the carrier and the housing. In this regard, the at least one bearing is arranged between the hollow protruding portion and the housing to provide support for the carrier and the planetary gear assembly, allowing smooth rotation of the plurality of planet gears around the sun gear. Moreover, the at least one bearing is arranged in such a way it can handle the load and stress applied during the operation of the electromechanical actuator. Advantageously, the arrangement of the at least one bearing between the hollow protruding portion of the carrier and the housing helps to reduce friction, prevent wear, and ensure efficient and reliable operation of the electromechanical actuator.

The term *"housing"* as used herein refers to a protective enclosure or casing that is positioned adjacent to the motor stator and is configured to encircle (or surround) the planetary gear assembly and the bearing assembly at least partly or completely. Optionally, the housing is fabricated from metal, non-metal, plastic, composites and the like. Beneficially, the housing is to protect the internal components of the electromechanical actuator from damage, contamination, and environmental hazards. The housing also helps to maintain the alignment and positioning of the components within the electromechanical actuator. Moreover, by surrounding the planetary gear assembly and the bearing assembly, the housing provides an additional layer of protection and support for components thereby preventing damage and wear to the gears of the planetary gear assembly and bearing assembly. Additionally, the housing can help to reduce the level of noise and vibration generated by the electromechanical actuator and provide a quieter and smoother operation.

Optionally, in use the housing is configured withstand axial and radial forces exerted by the distal end of the screw with the reciprocating movement of the outer hollow cylinder. During operation, the housing of the electromechanical actuator is configured to endure the forces exerted thereon. Notably, when the motor is activated, it causes the planetary gear assembly to rotate, which in turn causes the screw to rotate. The rotation of the screw produces the reciprocating motion of the inner hollow cylinder with respect to the outer hollow cylinder. The said reciprocating motion exerts both axial and radial forces on the housing.

Typically, the housing is designed to withstand the axial and radial forces by being structurally strong and rigid. The housing is configured to maintain its position and shape even when subjected to the forces that are produced by the reciprocating movement. In this regard, the housing is fabricated from a material that is strong enough to withstand the axial and radial forces experienced during operation. Notably, the housing secures the attachment of the carrier to the planetary gear assembly and the bearing assembly to prevent the housing from moving or shifting under the influence of the axial and radial forces produced by the motion of the screw without compromising the structural integrity of the electromechanical actuator.

Optionally, the electromechanical actuator further comprises a first attachment loop arranged at the proximal end of the inner hollow cylinder. The term *"first attachment loop"* as used herein refers to a loop-shaped structure that is designed to provide a secure and reliable attachment point for connecting the electromechanical actuator to other components or structures. Herein, the first attachment loop is located at the proximal end of the inner hollow cylinder. The first attachment loop may be used to connect the actuator to mounting brackets, frames, or other types of support structures. By providing a secure attachment point, the first attachment loop helps to ensure that the actuator operates effectively and reliably in a range of different applications. It helps to prevent the actuator from becoming dislodged or disconnected during use and prevents the malfunctioning or failure of the system. The first attachment loop is fabricated from durable and corrosion-resistant materials to ensure long-lasting performance.

Optionally, the electromechanical actuator further comprises a second attachment loop coupled to the housing. In this regard, the second attachment loop is similar to the first attachment loop that is coupled to the housing and is used to attach or connect the electromechanical actuator to another object or device. The second attachment loop is attached to the housing to fasten the electromechanical actuator in place and prevented it from moving or vibrating during operation. Moreover, the second attachment loop may be used to hang or suspend the electromechanical actuator.

Optionally, the electromechanical actuator further comprises a sensor arrangement configured to measure movement of the motor assembly, reciprocating assembly, planetary gear assembly and vibration thereof. In this regard, the sensor arrangement is designed to detect and measure movements and vibrations within the electromechanical actuator. Optionally, the sensors of the sensor arrangement can be placed in strategic locations within the electromechanical actuator, such as on the motor assembly, reciprocating assembly, and planetary gear assembly, and may be configured to detect movement, such as rotational and linear motion thereof. Optionally, the sensors may be arranged inside or outside of the electromechanical actuator. Typically, the sensors convert a physical activity into an electrical equivalent and deliver the electrical signals to be processed by the control unit. Moreover, the sensors are configured to provide feedback to a control unit that can adjust the performance of the electromechanical actuator in real time.

The control unit may be a software and/or hardware in the electromechanical system that is operable to implement specific algorithms therein. Moreover, the control unit employs a processor configured to receive the information from the sensors of the sensor arrangement. It will be appreciated that optionally the processor includes, but is not limited to, a microprocessor, a microcontroller, a complex instruction set computing (CISC) microprocessor, a reduced instruction set computer (RISC) microprocessor, a very long instruction word (VLIW) microprocessor, or any other type of processing circuit. Furthermore, the term *"processor"* may refer to one or more individual processors, processing devices and various elements associated with the control unit. For example, the sensors can detect when the motor assembly is operating outside of its normal range, which can indicate a problem within the motor assembly. The control unit may adjust the speed or torque of the motor assembly to rectify the problem to maintain the optimum working of the motor assembly. Similarly, the sensor arrangement is arranged to detect vibrations within the electromechanical actuator that may be caused by misalignment or wear in the bearing assembly, or by imbalances in the planetary gear assembly, cylinder assembly and reciprocating assembly. The control unit may adjust the operation of the electromechanical actuator to reduce or eliminate the vibrations, thereby improving the performance and reliability of the electromechanical actuator.

### DETAILED DESCRIPTION OF THE DRAWINGS

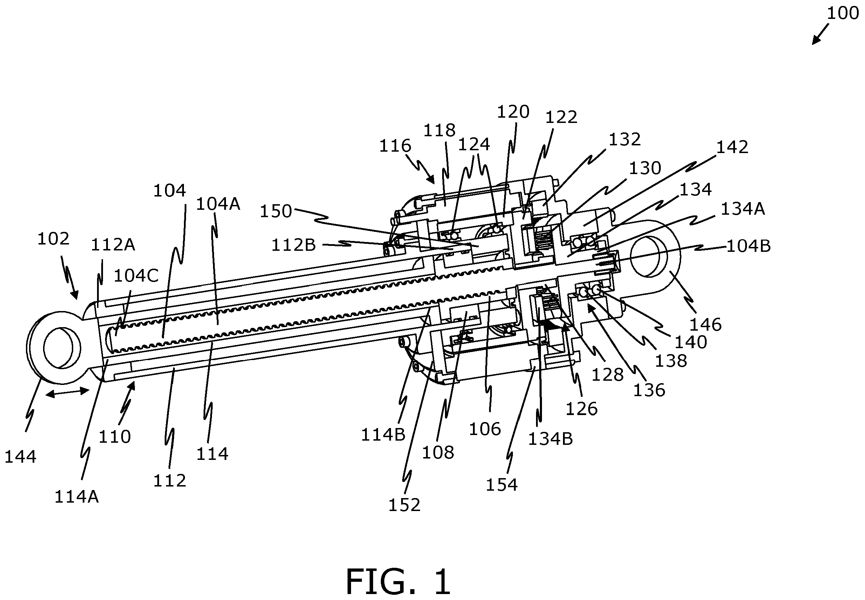

Referring to FIG. 1, illustrated is a cross-sectional view of an electromechanical actuator **100,** in accordance with an embodiment of the present invention. As shown, the electromechanical actuator **100** comprises a reciprocating assembly **102** having a screw **104** comprising a threaded body portion **104A** and having a proximal end 104C and a distal end **104B** integral with threaded body portion **104A,** a nut **106** threadably engaged to the threaded body portion **104A** of the screw **104,** and a guide **108** mounted on the nut **106.** The electromechanical actuator **100** comprises a cylinder assembly **110** having an outer hollow cylinder **112** having a proximal end **112A** and a distal end **112B** and an inner hollow cylinder **114** having a proximal end **114A** and a distal end **114B,** the inner hollow cylinder **114** enclosed by the outer hollow cylinder **112** and configured to receive the screw **104** of the reciprocating assembly **102** therethrough. The distal end of the screw **104B,** the distal end **114B** of the inner hollow cylinder and the distal end **112B** of the outer hollow cylinder are closer to the motor assembly **116** than the proximal end **112A** of outer hollow cylinder, the proximal end **114A** of the inner hollow cylinder and the proximal end **104** of the screw. Each of the proximal end **112A** of outer hollow cylinder, the proximal end **114A** of the inner hollow cylinder and the proximal end **104C** of the screw are directed away from a motor assembly **116** to the same direction.

The electromechanical actuator **100** comprises a motor assembly **116** concentrically arranged at the distal end **112B** of the outer hollow cylinder **112** for partially receiving the cylinder assembly **110.** The motor assembly **116** having a motor stator **118,** a motor rotor **120** surrounded by the motor stator **118,** a flange **122** abuts the motor rotor **120** and a pair of motor bearing **124** surrounded by the motor rotor **120.** The electromechanical actuator **100** comprises a planetary gear assembly **126** operatively arranged in connection with the motor assembly **116** and reciprocating assembly **102.** The planetary gear assembly **126** comprises a sun gear **128** coupled to the flange of the motor assembly **116** and receiving the distal end **104B** of the screw **104** therethrough, a plurality of planet gears **130** operatively coupled to the sun gear **128.** The planetary gear assembly **126** comprises a ring gear **132** operatively coupled to the plurality of planet gears **130,** and a carrier **134** for supporting the plurality of planet gears **130,** the carrier **134** operatively coupled to the distal end **104B** of the screw **104** for transmitting a rotary motion of the motor assembly **116** to the screw **104** for generating the reciprocating movement to be provided to the inner hollow cylinder **114.** Moreover, the carrier **134** of the planetary gear assembly **126** comprises a planer portion **134A** configured to support the plurality of planet gears **130,** and a hollow protruding portion **134B** integral with and extending from the planer portion **134A,** the hollow protruding portion **134B** configured to receive the distal end **104B** of the screw **104** therethrough. The electromechanical actuator **100** a bearing assembly **136** having at least one bearing (depicted as first bearing **138** and second bearing **140** arranged on the carrier **134** and a housing **142** abuts the motor stator **118** and configured to surround the planetary gear assembly **126** and the bearing assembly **136.**

As shown, the electromechanical actuator **100** comprises a first attachment loop **144** arranged at the proximal end **114A** of the inner hollow cylinder **114** and a second attachment loop **146** coupled to the housing **142.** Moreover, a bearing rest **150** arranged on the distal end **112B** of the outer hollow cylinder **112,** the bearing rest **150** supports the pair of motor bearing thereon **138, 140.** Furthermore, the electromechanical actuator **100** also includes a first cover plate **152** arranged on the distal end **112B** of the outer hollow cylinder **112** and abuts the bearing rest **150,** and a second cover plate **154** opposite to the first cover plate **152** and abuts the housing **146.**

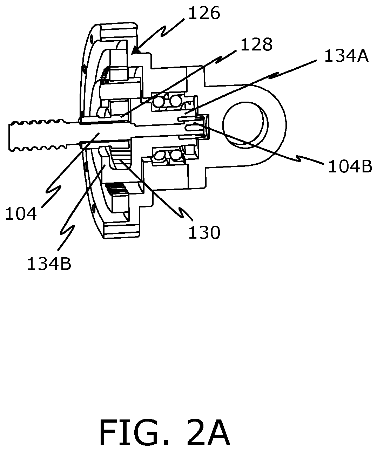

Referring to FIG.s. 2A, 2B and 2C illustrated are an arrangement of a screw **104** with a planetary gear assembly **126** of the electromechanical actuator **100,** in accordance with an embodiment of the present invention. As shown in FIG 2A, illustrated is a cross-section of the planetary gear assembly **126.** The sun gear **128** of the planetary gear assembly **126** is coupled to the distal end **104B** of the screw **104** therethrough. Moreover, the hollow protruding portion **134B** and the distal end **104B** of the screw **104** is operatively coupled using a key and hole arrangement **202.** As shown in FIG 2B, illustrated a carrier **134** of the planetary gear assembly **126** comprises a planer portion **134A** configured to support the plurality of planet gears **130** (as shown in FIG. 2A), and a hollow protruding portion **134B** integral with and extending from the planer portion **134A.** As shown in FIG 2C, illustrated a cross-section of carrier **134** of the planetary gear assembly **126.** As shown, the hollow protruding portion **134A** is configured to receive the distal end **104B** of the screw **104** therethrough to connect the screw **104** of the reciprocating assembly **102** with the planetary gear assembly **126.** To transfer the rotational motion of the motor assembly **116** into the reciprocation motion of the reciprocating assembly **102.**

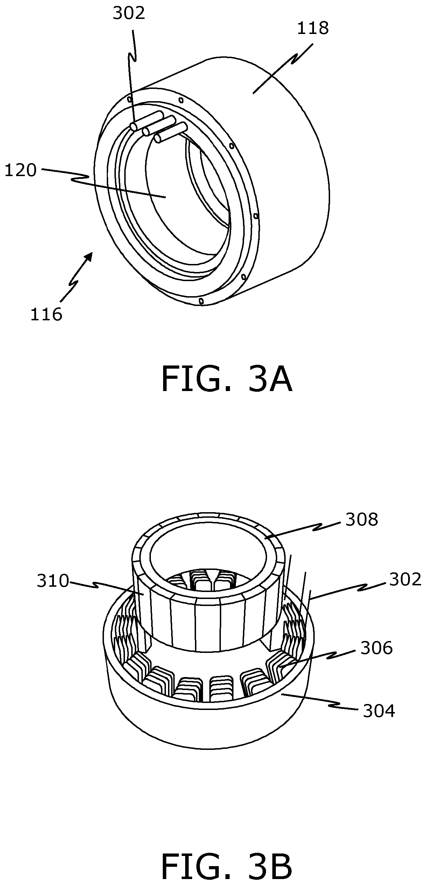

Referring to FIG. 3A, illustrated is a motor assembly **116** of the electromechanical actuator **100,** in accordance with an embodiment of the present invention. As shown in Fig. 3A, a motor assembly **116** having a motor stator **118** and a motor rotor **120** surrounded by the motor stator **118.** As shown, wire terminals **302** extending from the motor stator **118.** The wire terminals **302** are arranged to connect the motor stator **118** to an external power source. The external power source is configured to supply the power from the wire terminals **302** to the motor assembly **116.**

Referring to FIG. 3B, illustrated is a component of the motor assembly **116** of the electromechanical actuator **100,** in accordance with an embodiment of the present invention. As shown in Fig. 3B, the motor stator **118** comprises a coil housing **304** and a coil arrangement **306** housed within the coil housing **304.** The motor rotor **120** comprises a magnet housing **308** and a permanent magnet **310** housed within the magnet housing **308.** The wire terminals **302** extending from the coil arrangement **306** and through the coil housing **304.**

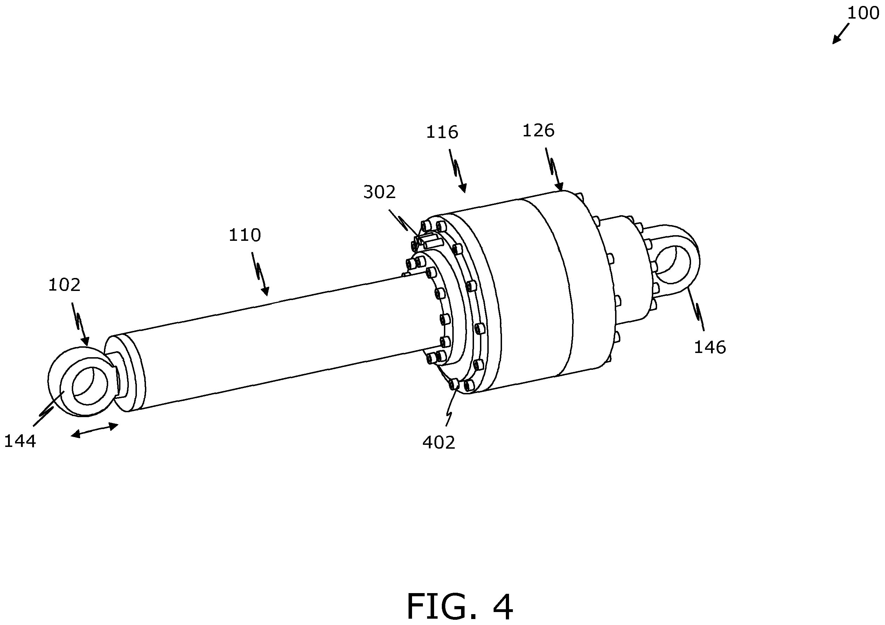

Referring to FIG. 4, illustrated is a perspective view of the electromechanical actuator **100,** in accordance with an embodiment of the present invention. As shown, the reciprocating assembly **102,** cylinder assembly **110,** motor assembly **116,** planetary gear assembly **126** and bearing assembly **136** are arranged together using a plurality of bolts **402** to construct the electromechanical actuator **100.** As shown, the first attachment loop **144** and the second attachment loop **146** are arranged on the opposite end of the electromechanical actuator **100.** The wire terminals **302** extends from the motor stator **118.**

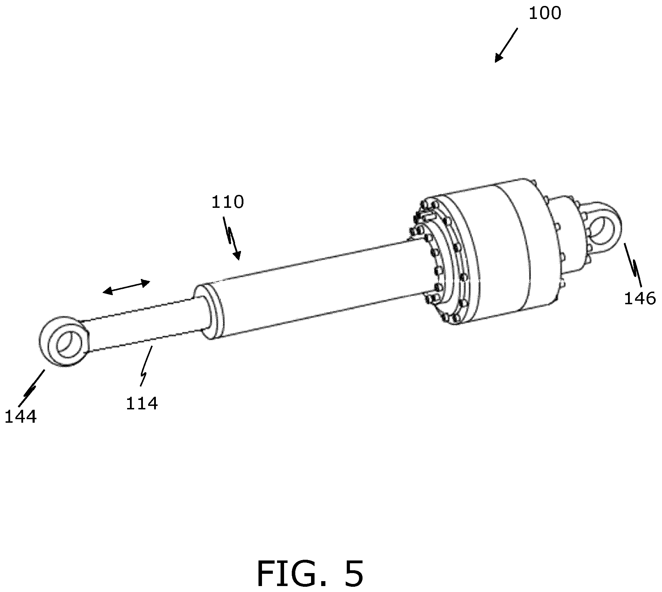

Referring to FIG. 5, illustrated is a perspective view of the electromechanical actuator **100,** wherein the figure shows the movement of the of inner hollow cylinder and the first attachment loop **144** moving with the cylinder, because it is attached to the cylinder. The reciprocating movement of the inner hollow cylinder is achieved by transmitting the rotary motion generated by the motor assembly **116** to the screw **104** (like shown in FIG. 2A-2C) and further to the inner hollow cylinder.

The electromechanical actuator **100** is attached from the first attachment loop **144** and the second attachment loop **146** to a desired object/s, which desired object/s can be for example any kind of work machine or any other suitable application in various industries such as for example aerospace, automotive, robotics, manufacturing industry and so forth, for control the movement of various components in machines and systems, by utilizing the reciprocating movement of the actuator.

Modifications to embodiments of the present invention described in the foregoing are possible without departing from the scope of the present invention as defined by the accompanying claims. Expressions such as "including", "comprising", "incorporating", "have", "is" used to describe and claim the present invention are intended to be construed in a non-exclusive manner, namely allowing for items, components or elements not explicitly described also to be present. Reference to the singular is also to be construed to relate to the plural.

## Claims

1. An electromechanical actuator (100) comprising:
- a reciprocating assembly (102) having
- a screw (104) comprising a threaded body portion (104A) having a proximal end (104C) and a distal end (104B) integral with the threaded body portion,
- a nut (106) threadably engaged to the threaded body portion of the screw, and
- a guide (108) mounted on the nut;
- a cylinder assembly (110) having
- an outer hollow cylinder (112) having a proximal end (112A) and a distal end (112B), and
- an inner hollow cylinder (114) having a proximal end (114A) and a distal end (114B), the inner hollow cylinder concentric enclosed by the outer hollow cylinder and configured to receive the screw of the reciprocating assembly therethrough concentrically, wherein the distal end of the inner hollow cylinder abuts the nut of reciprocating assembly to reciprocate with respect to the outer hollow cylinder with a reciprocating movement provided by the nut and the screw;
- a motor assembly (116) concentrically arranged at the distal end of the outer hollow cylinder for partially receiving the cylinder assembly, the motor assembly having
- a motor stator (118),
- a motor rotor (120) surrounded by the motor stator,
- a flange (122) abuts the motor rotor, and
- a pair of motor bearing (124);
- a planetary gear assembly (126) operatively arranged in connection with the motor assembly and reciprocating assembly, the planetary gear assembly comprising
- a sun gear (128) coupled to the flange of the motor assembly and receiving the distal end of the screw therethrough,
- a plurality of planet gears (130) operatively coupled to the sun gear,
- a ring gear (132) operatively coupled to the plurality of planet gears, and
- a carrier (134) for supporting the plurality of planet gears, the carrier operatively coupled to the distal end of the screw for transmitting a rotary motion of the motor assembly to the screw for generating the reciprocating movement to be provided to the inner hollow cylinder;
- a bearing assembly (136) having at least one bearing (138, 140) arranged on the carrier;
- a housing (142) abuts the motor stator and configured to surround the planetary gear assembly and the bearing assembly, **characterized in that** the said pair of motor bearing is surrounded by the motor rotor and **in that** the electromechanical actuator (100) further comprises a bearing rest (150) arranged on the distal end (112B) of the outer hollow cylinder (112), the bearing rest supports the pair of motor bearing (124) thereon; and
- a first cover plate (152) arranged on the distal end (112B) of the outer hollow cylinder (112) and abuts the bearing rest (150), and a second cover plate (154) opposite to the first cover plate and abuts the housing (142), wherein the motor assembly (116) is a frameless motor with the motor stator (118) arranged between the first cover plate (152) and the second cover plate (154).

2. An electromechanical actuator (100) according to claim 1, wherein the carrier (134) of the planetary gear assembly (126) comprises
- a planer portion (134A) configured to support the plurality of planet gears (130), and
- a hollow protruding portion (134B) integral with and extending from the planer portion, the hollow protruding portion configured to receive the distal end (104B) of the screw (104) therethrough.

3. An electromechanical actuator (100) according to claim 2, wherein the hollow protruding portion (134B) and the distal end (104B) of the screw (104) is operatively coupled using a key and hole arrangement (202).

4. An electromechanical actuator (100) according to claim 2, wherein the at least one bearing (138, 140) is arranged between the hollow protruding portion (134B) of the carrier (134) and the housing (142).

5. An electromechanical actuator (100) according to any of the preceding claims, wherein the sun gear (128) is configured to receive the distal end (104B) of the screw (104) therethrough in a spaced apart manner.

6. An electromechanical actuator (100) according to any of the preceding claims, further comprising a first attachment loop (144) arranged at the proximal end (114A) of the inner hollow cylinder (114).

7. An electromechanical actuator (100) according to any of the preceding claims, further comprising a second attachment loop (146) coupled to the housing (150).

8. An electromechanical actuator (100) according to any of the preceding claims, wherein
- the motor stator (118) comprises a coil housing (304) and a coil arrangement (306) housed within the coil housing, and
- the motor rotor (120) comprises a magnet housing (308) and a permanent magnet (310) housed within the magnet housing.

9. An electromechanical actuator (100) according to claim 8, further comprising connecting wire terminals (302) extending from the coil arrangement (306) and through the coil housing (304).

10. An electromechanical actuator (100) according to any of the preceding claims, wherein in use the housing (142) is configured to withstand axial and radial forces exerted by the distal end of the screw (104) with the reciprocating movement of the outer hollow cylinder (112), wherein the housing secures an attachment of the carrier to the planetary gear assembly and the bearing assembly to prevent the housing from moving or shifting under the influence of the axial and radial forces.

11. An electromechanical actuator (100) according to claim 10, wherein the reciprocating movement comprises to-and-fro movement of the inner hollow cylinder (114) with respect to the outer hollow cylinder (112).

12. An electromechanical actuator (100) according to any of the preceding claims, further comprising a sensor arrangement configured to measure movement of the motor assembly (116), reciprocating assembly (102), planetary gear assembly (126) and vibration thereof.

## Patentansprüche

1. Elektromechanischer Aktuator (100), umfassend:
- eine Hubkolbenanordnung (102), die aufweist
- eine Schraube (104), umfassend einen Gewindekörperabschnitt (104A), der ein proximales Ende (104C) und ein distales Ende (104B) aufweist, das mit dem Gewindekörperabschnitt einstückig ist,
- eine Mutter (106), die mit dem Gewindekörperabschnitt der Schraube verschraubt in Eingriff steht, und
- eine Führung (108), die auf der Mutter montiert ist;
- eine Zylinderanordnung (110), die aufweist
- einen äußeren Hohlzylinder (112), der ein proximales Ende (112A) und ein distales Ende (112B) aufweist, und
- einen inneren Hohlzylinder (114), der ein proximales Ende (114A) und ein distales Ende (114B) aufweist, wobei der innere Hohlzylinder konzentrisch durch den äußeren Hohlzylinder umschlossen und konfiguriert ist, um die Schraube der Hubkolbenanordnung dahindurch konzentrisch aufzunehmen, wobei das distale Ende des inneren Hohlzylinders an der Mutter der Hubkolbenanordnung anliegt, um sich in Bezug auf den äußeren Hohlzylinder mit einer Hin- und Herbewegung hin- und herzubewegen, die durch die Mutter und die Schraube bereitgestellt wird;
- eine Motoranordnung (116), die an dem distalen Ende des äußeren Hohlzylinders konzentrisch eingerichtet ist, um die Zylinderanordnung teilweise aufzunehmen, wobei die Motoranordnung aufweist
- einem Motorstator (118),
- einen Motorrotor (120), der durch den Motorstator umgeben ist,
- einen Flansch (122), der an dem Motorrotor anliegt, und
- ein Paar Motorlager (124);
- eine Planetenradanordnung (126), die betriebsmäßig in Verbindung mit der Motoranordnung und der Hubkolbenanordnung eingerichtet ist, die Planetenradanordnung umfassend
- ein Sonnenrad (128), das mit dem Flansch der Motoranordnung gekoppelt ist und das distale Ende der Schraube aufnimmt,
- eine Vielzahl von Planetenrädern (130), die betriebsmäßig mit dem Sonnenrad gekoppelt sind,
- ein Ringrad (132), das betriebsmäßig mit der Vielzahl von Planetenrädern gekoppelt ist, und
- einen Träger (134) zum Stützen der Vielzahl von Planetenrädern, wobei der Träger betriebsmäßig mit dem distalen Ende der Schraube gekoppelt ist, zum Übertragen einer Drehbewegung der Motoranordnung auf die Schraube zum Erzeugen der Hin- und Herbewegung, die dem inneren Hohlzylinder bereitgestellt werden soll;
- eine Lageranordnung (136), die mindestens ein Lager (138, 140) aufweist, das auf dem Träger eingerichtet ist;
- ein Gehäuse (142), das an dem Motorstator anliegt und konfiguriert ist, um die Planetenradanordnung und die Lageranordnung zu umgeben, **dadurch gekennzeichnet, dass** das Paar Motorlager durch den Motorrotor umgeben ist und dass der elektromechanische Aktuator (100) ferner eine Lagerablage (150) umfasst, die an dem distalen Ende (112B) des äußeren Hohlzylinders (112) eingerichtet ist, wobei die Lagerablage das Paar Motorlager (124) darauf stützt; und
- eine erste Abdeckplatte (152), die an dem distalen Ende (112B) des äußeren Hohlzylinders (112) eingerichtet ist und an der Lagerstütze (150) anliegt, und eine zweite Abdeckplatte (154), die der ersten Abdeckplatte gegenüberliegt und an dem Gehäuse (142) anliegt, wobei die Motoranordnung (116) ein rahmenloser Motor ist, wobei der Motorstator (118) zwischen der ersten Abdeckplatte (152) und der zweiten Abdeckplatte (154) eingerichtet ist.

2. Elektromechanischer Aktuator (100) nach Anspruch 1, wobei der Träger (134) der Planetenradeanordnung (126) umfasst
- einen Planerabschnitt (134A), der konfiguriert ist, um die Vielzahl von Planetenrädern (130) zu stützen, und
- einen hohlen, vorstehenden Abschnitt (134B), der mit dem Planerabschnitt einstückig ist und sich von diesem erstreckt, wobei der hohle, vorstehende Abschnitt konfiguriert ist, um das distale Ende (104B) der Schraube (104) dahindurch aufzunehmen.

3. Elektromechanischer Aktuator (100) nach Anspruch 2, wobei der hohle, vorstehende Abschnitt (134B) und das distale Ende (104B) der Schraube (104) unter Verwendung einer Schlüssel- und Locheinrichtung (202) betriebsmäßig gekoppelt sind.

4. Elektromechanischer Aktuator (100) nach Anspruch 2, wobei das mindestens eine Lager (138, 140) zwischen dem hohlen, vorstehenden Abschnitt (134B) des Trägers (134) und dem Gehäuse (142) eingerichtet ist.

5. Elektromechanischer Aktuator (100) nach einem der vorstehenden Ansprüche, wobei das Sonnenrad (128) konfiguriert ist, um das distale Ende (104B) der Schraube (104) in einer beabstandeten Weise dahindurch aufzunehmen.

6. Elektromechanischer Aktuator (100) nach einem der vorstehenden Ansprüche, ferner umfassend eine erste Befestigungsschlaufe (144), die an dem proximalen Ende (114A) des inneren Hohlzylinders (114) eingerichtet ist.

7. Elektromechanischer Aktuator (100) nach einem der vorstehenden Ansprüche, ferner umfassend eine zweite Befestigungsschlaufe (146), die mit dem Gehäuse (150) gekoppelt ist.

8. Elektromechanischer Aktuator (100) nach einem der vorstehenden Ansprüche, wobei
- der Motorstator (118) ein Spulengehäuse (304) und eine Spuleneinrichtung (306) umfasst, die innerhalb des Spulengehäuses untergebracht ist, und
- der Motorrotor (120) ein Magnetgehäuse (308) und einen Permanentmagneten (310) umfasst, der innerhalb des Magnetgehäuses untergebracht ist.

9. Elektromechanischer Aktuator (100) nach Anspruch 8, ferner umfassend Verbindungsdrahtanschlüsse (302), die sich von der Spuleneinrichtung (306) und durch das Spulengehäuse (304) erstrecken.

10. Elektromechanischer Aktuator (100) nach einem der vorstehenden Ansprüche, wobei das Gehäuse (142), in Verwendung, konfiguriert ist, um axialen und radialen Kräften standzuhalten, die durch das distale Ende der Schraube (104) mit der Hin- und Herbewegung des äußeren Hohlzylinders (112) ausgeübt werden, wobei das Gehäuse eine Befestigung des Trägers an der Planetenradanordnung und der Lageranordnung sichert, um zu verhindern, dass sich das Gehäuse unter dem Einfluss der axialen und radialen Kräfte bewegt oder verschiebt.

11. Elektromechanischer Aktuator (100) nach Anspruch 10, wobei die Hin- und Herbewegung eine Zu- und Von-Bewegung des inneren Hohlzylinders (114) in Bezug auf den äußeren Hohlzylinder (112) umfasst.

12. Elektromechanischer Aktuator (100) nach einem der vorstehenden Ansprüche, ferner umfassend eine Sensoreinrichtung, die konfiguriert ist, um die Bewegung der Motoranordnung (116), der Hubkolbenanordnung (102), der Planetenradanordnung (126) und die Vibration davon zu messen.

## Revendications

1. Actionneur électromécanique (100) comprenant :
- un ensemble à mouvement alternatif (102) présentant
- une vis (104) comprenant une partie corps fileté (104A) ayant une extrémité proximale (104C) et une extrémité distale (104B) intégrées à la partie corps fileté,
- un écrou (106) en prise filetée avec la partie corps fileté de la vis, et
- un guide (108) monté sur l'écrou ;
- un ensemble de cylindres (110) ayant
- un cylindre creux externe (112) ayant une extrémité proximale (112A) et une extrémité distale (112B), et
- un cylindre creux interne (114) ayant une extrémité proximale (114A) et une extrémité distale (114B), le cylindre creux interne étant concentrique et enfermé par le cylindre creux externe et conçu pour recevoir la vis de l'ensemble à mouvement alternatif à travers celui-ci de manière concentrique, dans lequel l'extrémité distale du cylindre creux interne vient en butée contre l'écrou de l'ensemble à mouvement alternatif afin d'effectuer un mouvement alternatif par rapport au cylindre creux externe avec un mouvement alternatif fourni par l'écrou et la vis ;
- un ensemble moteur (116) agencé concentriquement au niveau de l'extrémité distale du cylindre creux externe pour recevoir partiellement l'ensemble de cylindres, l'ensemble moteur ayant
- un stator de moteur (118),
- un rotor de moteur (120) entouré par le stator de moteur,
- une bride (122) en butée contre le rotor de moteur, et
- une paire de roulements de moteur (124) ;
- un ensemble train épicycloïdal (126) agencé fonctionnellement en liaison avec l'ensemble moteur et l'ensemble à mouvement alternatif, l'ensemble train épicycloïdal comprenant
- une roue solaire (128) accouplée à la bride de l'ensemble moteur et recevant l'extrémité distale de la vis à travers celle-ci,
- une pluralité de satellites (130) accouplés fonctionnellement à la roue solaire,
- une couronne (132) accouplée fonctionnellement à la pluralité d'engrenages planétaires, et
- un support (134) pour supporter la pluralité de satellites, le support étant accouplé fonctionnellement à l'extrémité distale de la vis pour transmettre un mouvement rotatif de l'ensemble moteur à la vis pour générer le mouvement alternatif à fournir au cylindre creux interne ;
- un ensemble de roulements (136) ayant au moins un roulement (138, 140) agencé sur le support ;
- un boîtier (142) en butée avec le stator de moteur et conçu pour entourer l'ensemble train épicycloïdal et l'ensemble de roulements, **caractérisé en ce que** ladite paire de roulements de moteur est entourée par le rotor de moteur et **en ce que** l'actionneur électromécanique (100) comprend en outre un appui de roulements (150) agencé sur l'extrémité distale (112B) du cylindre creux externe (112), l'appui de roulements supportant la paire de roulements de moteur (124) sur celui-ci ; et
- une première plaque de recouvrement (152) agencée sur l'extrémité distale (112B) du cylindre creux externe (112) et en butée contre l'appui de roulement (150), et une seconde plaque de recouvrement (154) en regard de la première plaque de recouvrement et en butée contre le boîtier (142), dans lequel l'ensemble moteur (116) étant un moteur sans boîtier, le stator de moteur (118) étant agencé entre la première plaque de recouvrement (152) et la seconde plaque de recouvrement (154).

2. Actionneur électromécanique (100) selon la revendication 1, dans lequel le support (134) de l'ensemble train épicycloïdal (126) comprend
- une partie plane (134A) conçue pour supporter la pluralité de satellites (130), et
- une partie saillante creuse (134B) intégrée à la partie plane et s'étendant à partir de celle-ci, la partie saillante creuse étant conçue pour recevoir l'extrémité distale (104B) de la vis (104) à travers celle-ci.

3. Actionneur électromécanique (100) selon la revendication 2, dans lequel la partie saillante creuse (134B) et l'extrémité distale (104B) de la vis (104) sont accouplées fonctionnellement à l'aide d'un agencement clé et serrure (202).

4. Actionneur électromécanique (100) selon la revendication 2, dans lequel l'au moins un roulement (138, 140) est agencé entre la partie saillante creuse (134B) du support (134) et le boîtier (142).

5. Actionneur électromécanique (100) selon l'une quelconque des revendications précédentes, dans lequel la roue solaire (128) est conçue pour recevoir l'extrémité distale (104B) de la vis (104) à travers celle-ci de manière espacée.

6. Actionneur électromécanique (100) selon l'une quelconque des revendications précédentes, comprenant en outre une première boucle de fixation (144) agencée au niveau de l'extrémité proximale (114A) du cylindre creux interne (114).

7. Actionneur électromécanique (100) selon l'une quelconque des revendications précédentes, comprenant en outre une seconde boucle de fixation (146) accouplée au logement (150).

8. Actionneur électromécanique (100) selon l'une quelconque des revendications précédentes, dans lequel
- le stator de moteur (118) comprend un logement de bobine (304) et un arrangement de bobine (306) logé à l'intérieur du logement de bobine, et
- le rotor de moteur (120) comprend un logement d'aimant (308) et un aimant permanent (310) logé à l'intérieur du logement d'aimant.

9. Actionneur électromécanique (100) selon la revendication 8, comprenant en outre des bornes de fils de connexion (302) s'étendant à partir de l'agencement de bobine (306) et à travers le logement de bobine (304).

10. Actionneur électromécanique (100) selon l'une quelconque des revendications précédentes, dans lequel, en cours d'utilisation, le logement (142) est conçu pour résister à des forces axiales et radiales exercées par l'extrémité distale de la vis (104) avec le mouvement alternatif du cylindre creux externe (112), dans lequel le logement fixe une attache du support à l'ensemble train épicycloïdal et à l'ensemble de roulements pour empêcher le logement de se déplacer ou de se déplacer sous l'influence des forces axiales et radiales.

11. Actionneur électromécanique (100) selon la revendication 10, dans lequel le mouvement alternatif comprend un mouvement de va-et-vient du cylindre creux interne (114) par rapport au cylindre creux externe (112).

12. Actionneur électromécanique (100) selon l'une quelconque des revendications précédentes, comprenant en outre un agencement de capteurs conçu pour mesurer le mouvement de l'ensemble moteur (116), de l'ensemble alternatif (102), de l'ensemble train épicycloïdal (126) et des vibrations de ceux-ci.
